# EUROPEAN PATENT APPLICATION

(11) **EP 3 348 602 A1**
(43) Date of publication of application: **18.07.2018**
(21) Application number: 16844095.6
(22) Date of filing: 05.08.2016
(51) Int. Cl.: C08J 5/04, B29B 7/48, B29B 7/90, B29C 45/00

(54) **GLASS FIBER-REINFORCED POLYPROPYLENE RESIN COMPOSITION**

(30) Priority: 11.09.2015 JP 2015180102
(71) Applicant: Asahi Fiber Glass Company, Limited, Tokyo 101-0045 (JP)
(72) Inventor: ZHANG Liang, Tokyo 101-0045 (JP); IZUMI Ippei, Tokyo 101-0045 (JP)
(74) Representative: Gulde & Partner
(86) International application number: PCT/JP2016/073118
(87) International publication number: WO 2017/043231

(57) **Abstract**

Provided is a polypropylene resin composition which has improved mechanical strength, has good appearance, and does not exhibit anisotropy in strength, while having a high glass fiber content ratio. The polypropylene resin composition having a high glass fiber content ratio is configured such that the glass fibers have a mass-average fiber length of 200 to 300 µm, and that 60% by mass or more of the glass fibers relative to the mass of the glass fibers have fiber lengths in the range of ±100 µm from the mass-average fiber length.

## Description

### Technical Field

The present invention relates to a glass fiber-reinforced polypropylene resin composition and a method for producing the same.

### Background Art

Polypropylene resins have been widely used because of their excellent formability, excellent economical efficiency, and low relative densities of 1.0 or lower. It is well known that glass fibers are incorporated into polypropylene resins to improve the mechanical strength and thermal deformation temperature of the polypropylene resins. Polypropylene resin compositions having high glass fiber content ratios have been proposed to obtain further improved strength with an intention of substituting glass fiber-reinforced polyamide or glass fiber-reinforced polybutylene terephthalate.

Patent Literature 1 discloses a polypropylene resin composition comprising a modified polypropylene resin (component A), glass fibers (component B), and a polypropylene resin (component C), wherein the content of component B is 1 to 80 parts by mass, where the total amount of components A to C is taken as 100 parts by mass.

Patent Literature 2 discloses a resin composition obtained by melt kneading of a polypropylene-based resin at 49.9 to 98.9% by mass, glass fibers at 1 to 50% by mass, and a maleic anhydride-grafted polypropylene resin at 0.1 to 20% by mass.

### Citation List

### Patent Literatures

Patent Literature 1: Japanese Patent Application Publication No. 2004-197068
Patent Literature 2: Japanese Patent Application Publication No. 2006-241340

### Summary of Invention

### Technical Problems

In injection molding, when the glass fiber content ratio in a polypropylene resin composition is increased, the insufficient flowability of the resin composition and the like cause problems such as poor appearance and anisotropy in strength due to nonuniform orientation of glass fibers.

An object of the present invention is to provide a polypropylene resin composition which has improved mechanical strength, has good appearance, and does not exhibit anisotropy in strength, while having a high glass fiber content ratio.

### Solution to Problems

It has been found that the above-described object can be achieved by a polypropylene resin composition having a high glass fiber content ratio configured such that the glass fibers have a mass-average fiber length of 200 to 300 µm, and that 60% by mass or more of the glass fibers relative to the mass of the glass fibers have fiber lengths in the range of ±100 µm from the mass-average fiber length. Specifically, the present invention relates to the following [1] to [11].
[1] A polypropylene resin composition comprising:
   a polypropylene-based resin; and
   glass fibers, wherein
   the glass fibers have a mass-average fiber length of 200 to 300 µm,
   60% by mass or more of the glass fibers relative to the mass of the glass fibers have fiber lengths in the range of ±100 µm from the mass-average fiber length, and
   the content of the glass fibers is 30 to 60% by mass relative to the mass of the polypropylene resin composition.
[2] The polypropylene resin composition according to the above-described [1], wherein
   25% by mass or less of the glass fibers relative to the mass of the glass fibers have fiber lengths of 400 µm or more.
[3] The polypropylene resin composition according to the above-described [1] or [2], wherein
   the glass fibers have fiber diameters of 9 to 13 µm.
[4] The polypropylene resin composition according to any one of the above-described [1] to [3], wherein
   the glass fibers are E glass fibers or S glass fibers.
[5] The polypropylene resin composition according to any one of the above-described [1] to [4], which is used for injection molding.
[6] A method for producing the polypropylene resin composition according to the above-described [1], comprising the steps of:
   (a) supplying a polypropylene-based resin to a melt kneading extruder, wherein the melt flow rate of the polypropylene-based resin is 3 to 15 g/10 minutes (at 230°C under a load of 2.169 kgf);
   (b) supplying a bundle of glass fibers having fiber lengths of 1.5 to 6 mm to the melt kneading extruder, and melt-kneading the polypropylene-based resin and the glass fibers with each other, wherein the content of the glass fibers is 60 to 75% by mass relative to the total mass of the polypropylene-based resin and the glass fibers; and
   (c) supplying an additional polypropylene-based resin to the melt kneading extruder to obtain the polypropylene resin composition, wherein the melt flow rate of the additional polypropylene-based resin is 30 to 60 g/10 minutes (at 230°C under a load of 2.169 kgf), and the content of the glass fibers is 30 to 60% by mass relative to the mass of the polypropylene resin composition.
[7] The method according to the above-described [6], wherein
   the number of glass fibers bundled in the bundle of glass fibers is 900 to 1500.
[8] The method according to the above-described [6] or [7], wherein
   the polypropylene-based resin in step (a) is a polypropylene resin, a modified polypropylene resin, or a mixture of a polypropylene resin and a modified polypropylene resin.
[9] The method according to any one of the above-described [6] to [8], wherein
   the additional polypropylene-based resin in step (c) is a polypropylene resin, a modified polypropylene resin, or a mixture of a polypropylene resin and a modified polypropylene resin.
[10] The method according to any one of the above-described [6] to [9], wherein
   the melt kneading extruder has three supply ports,
   the polypropylene-based resin is introduced through a first supply port,
   the bundle of glass fibers is supplied through a second supply port, and
   the additional polypropylene-based resin is supplied through a third supply port.
[11] The method according to any one of the above-described [6] to [10], wherein
   the melt kneading extruder is a twin-screw-type melt kneading extruder.

### Advantageous Effects of Invention

The present invention provides a polypropylene resin composition which has improved mechanical strength, has good appearance, and does not exhibit anisotropy in strength, while having a high glass fiber content ratio.

### Description of Embodiments

The present invention relates to a polypropylene resin composition comprising:
a polypropylene-based resin; and
glass fibers, wherein
the glass fibers have a mass-average fiber length of 200 to 300 µm,
60% by mass or more of the glass fibers relative to the mass of the glass fibers have fiber lengths in the range of ±100 µm from the mass-average fiber length,
the content of the glass fibers is 30 to 60% by mass relative to the polypropylene resin composition.

In the present invention, the polypropylene-based resin comprises a polypropylene resin, a modified polypropylene resin, or a mixture thereof.

A polypropylene resin is a propylene homopolymer having no functional group, and is used as a material, called a matrix, to form a formed article by injection molding or the like. The mass-average molecular weight of the polypropylene resin is preferably 30,000 to 400,000, and more preferably 100,000 to 300,000. When the mass-average molecular weight is 30,000 or higher, not only a formed article can be formed easily, but also heat resistance and mechanical strength enough for practical use can be exhibited. When the mass-average molecular weight is 400,000 or lower, a formed article can be formed with a general-purpose injection molding machine. The mass-average molecular weight can be determined by dissolving the polypropylene resin in trichlorobenzene or o-dichlorobenzene at a temperature of 150°C, followed by high-temperature gel permeation chromatography.

The melt flow rate (MFR) of the polypropylene resin is preferably 3 to 60 g/10 minutes, and more preferably 5 to 55 g/10 minutes at 230°C under a load of 2.169 kgf. When the MFR is 3 g/10 minutes or higher, a viscosity can be obtained which allows the glass fibers to be uniformly dispersed in the polypropylene-based resin. When the MFR is 60 g/10 minutes or lower, the viscosity of the polypropylene-based resin is not lowered to such an extent that the glass fibers cannot be uniformly dispersed. The MFR can be determined according to JIS K7210.

The polypropylene resin is known, and is readily available on the market or can be prepared.

The modified polypropylene resin is used for the purpose of increasing the polarity on the polypropylene resin side to enhance the adhesion between the glass fibers and the polypropylene resin. The polypropylene resin is a resin having a very low polarity, and is less likely to interact with the glass fiber surface having a relatively high polarity. The modified polypropylene resin is one obtained by introducing a functional group having a high polarity into a polypropylene resin by an addition reaction or a graft reaction. The functional group having a high polarity acts on the glass fibers, and polypropylene chains to which the functional group is added are compatible with the polypropylene resin. Hence, the adhesion between the polypropylene resin and the glass fibers can be improved. The functional group having a high polarity may be a carboxyl group, a hydroxy group, or an epoxy group, and is preferably a carboxyl group from the viewpoint that no undesirable side reaction occurs during the melt kneading for producing the resin composition.

The modified polypropylene resin is, for example, a polypropylene resin subjected to graft polymerization of maleic acid and having carboxyl groups as side chains.

The mass-average molecular weight of the modified polypropylene resin is 10,000 to 200,000, and preferably 30, 000 to 150,000. When the mass-average molecular weight is 10,000 or higher, the modified polypropylene resin does not plasticize the polypropylene resin, which serves as the matrix, at around room temperature, and hence does not impair the mechanical strength of the obtained formed article. When the mass-average molecular weight is 200,000 or lower, the modified polypropylene resin exhibits melt behaviors similar to those of the polypropylene resin during melt kneading, resulting in sufficient compatibility with the polypropylene resin, so that the mechanical strength of the formed article can be improved.

The MFR of the modified polypropylene resin is preferably 3 to 60 g/10 minutes, and more preferably 8 to 50 g/10 minutes at 230°C under a load of 2.169 kgf. When the MFR is 3 g/10 minutes or higher, sufficient compatibility with the polypropylene resin is obtained during melt kneading. When the MFR is 60 g/10 minutes or lower, it is possible to prevent a phenomenon in which an excessively low viscosity results in a poor compatibility with the polypropylene resin.

The acid number of the modified polypropylene resin is preferably 50 to 100 mg KOH/g, and more preferably 50 to 80 mg KOH/g. When the acid number of the modified polypropylene resin is 50 mg KOH/g or higher, the number of polar functional groups per unit molecular weight is so sufficient that the adhesion to the glass fiber is improved. When the acid number is 100 mg KOH/g or lower, the number of polar functional groups is not increased excessively to such an extent that the water resistance of the formed article is impaired. The acid number can be determined according to JIS K0070.

The modified polypropylene resin is known, and is readily available on the market, or can be prepared.

When the polypropylene-based resin is a mixture of a polypropylene resin and a modified polypropylene resin, the content of the modified polypropylene resin is 0.1 to 10.0 % by mass, and preferably 1.0 to 5.0% by mass relative to the mass of the polypropylene-based resin. When the content of the modified polypropylene resin is 0.1% by mass or higher, the modified polypropylene resin can be present between the polypropylene resin and the glass fibers to improve the adhesion, so that the mechanical strength of the formed article of the resin composition of the present invention can be improved. When the content of the modified polypropylene resin is 10.0% by mass or less, it is possible to suppress the decrease in water resistance of the resin composition due to the polar functional groups contained in the modified polypropylene resin.

The glass fibers contained in the polypropylene resin composition have a mass-average fiber length of 200 to 300 µm, and preferably 210 to 290 µm. The fiber length of a glass fiber is the length in the longitudinal direction of the glass fiber. In addition, the mass-average fiber length is a mass-average value calculated from the fiber lengths of 200 or more glass fibers. The fiber lengths can be determined, for example, from magnified images of glass fibers which are taken out by combusting the resin components in the polypropylene resin composition at a temperature of 500°C or above to eliminate the resin components from the polypropylene resin composition. Meanwhile, the mass-average fiber length is obtained by, for example, measuring the fiber lengths of 200 or more test pieces extracted at random from the glass fibers taken out, and calculating the mass average of the measured values. When the mass-average fiber length is 200 µm or more, the mechanical strength of a formed article obtained by injection molding is improved. When the mass-average fiber length is 300 µm or less, flow marks due to the glass fibers which are caused on the surface of a formed article by the flowing during injection molding are suppressed, so that a formed article with a flat and smooth surface can be obtained.

In the polypropylene resin composition of the present invention, 60% by mass or more, preferably 60. 5% by mass or more, and more preferably 61% by mass or more of the glass fibers relative to the mass of the glass fibers have fiber lengths in the range of ±100 µm from the mass-average fiber length. When the amount of the glass fibers having fiber lengths in the range of ±100 µm from the mass-average fiber length is 60% by mass or more, not only a formed article with a flat and smooth surface can be obtained, but also the anisotropy in mechanical strength of the formed article is reduced.

In addition, in the polypropylene resin composition of the present invention, for example, 25% by mass or less, and preferably 22% by mass or less of the glass fibers relative to the glass fibers have fiber lengths of 400 µm or more. When the glass fibers having fiber lengths of 400 µm or more account for 25% by mass or less, a formed article can be obtained with a flat and smooth surface on which flow marks due to the glass fibers are suppressed.

The polyethylene resin composition of the present invention comprises the glass fibers at a ratio of 30 to 60 % by mass, and preferably 40 to 60% by mass relative to the mass of the polyethylene resin composition. When the content of the glass fibers is 30% by mass or more, it is possible to improve the mechanical strength of a formed article obtained by injection molding. When the content of the glass fibers is 60% by mass or less, an injection-molded article having a flat and smooth surface can be obtained.

The fiber diameters of the glass fibers are, for example, 9 to 13 µm, and preferably 11 to 13 µm. The fiber diameter of a glass fiber is the largest length in the cross-sectional direction of the fiber. When the fiber diameters are 9 µm or more, the strength of the polypropylene resin composition can be improved sufficiently. When the fiber diameters are 13 µm or less, a polypropylene resin composition having good appearance can be obtained. The fiber diameters of the glass fibers can be determined by the same method as for the measurement of the fiber lengths.

Examples of the glass fibers include E glass fibers, S glass fibers, C glass fibers, D glass fibers, and the like. From the viewpoints of the economical efficiency and the mechanical strength of the resin composition composited with the glass fibers, E glass fibers or S glass fibers are preferable.

For the purpose of improving the adhesion to the polypropylene resin or the modified polypropylene resin, the glass fibers may be subjected to a surface treatment. An agent for the surface treatment may be a solid epoxy resin, a maleic acid-graft-polymerization-modified polypropylene resin, a polyurethane resin, or the like. From the viewpoint of the adhesion to the polypropylene resin or the modified polypropylene resin, the surface treatment agent is preferably a solid epoxy resin or a maleic acid-graft-polymerization-modified polypropylene resin.

A method for performing the surface treatment on the glass fibers is, for example, a method in which 900 to 1500 glass fibers are bundled, and a treatment liquid obtained by dissolving or dispersing the above-described surface treatment agent in an aqueous medium is applied onto the bundled glass fibers with a roller or the like. The bundle of the glass fibers subjected to the surface treatment may be cut into lengths of 1.5 mm to 6 mm, and dried by heating with a hot-air oven or the like.

The glass fibers are known, and are readily available on the market or can be prepared.

The MFR of the polypropylene resin composition is preferably 2 to 5 g/10 minutes, and more preferably 2 to 4 g/10 minutes at 230°C under a load of 2.169 kgf. When the MFR is 2 g/10 minutes or higher, an excellent filling property of the resin composition into a mold is obtained during forming by injection molding or the like. When the MFR is 5 g/10 minutes or lower, the flowability in a mold during forming is not increased excessively, making it possible to obtain a formed article having an excellent appearance and exhibiting no anisotropy in strength.

The polypropylene resin composition of the present invention may further comprise a pigment, an antioxidant, an ultraviolet absorber, a fire-retarding material, an inorganic filler, and the like, in addition to the above-described components.

The polypropylene resin composition of the present invention can be formed by, for example, injection molding.

The polypropylene resin composition of the present invention can be produced, for example, by a method comprising the following steps (a) to (c):
(a) a step of supplying a polypropylene-based resin to a melt kneading extruder, wherein the melt flow rate (MFR) of the polypropylene-based resin is 3 to 15 g/10 minutes (at 230°C under a load of 2.169 kgf);
(b) a step of supplying a bundle of glass fibers having fiber lengths of 1.5 to 6 mm to the melt kneading extruder, and melt-kneading the polypropylene-based resin and the glass fibers with each other, wherein the content of the glass fibers is 60 to 75% by mass relative to the total mass of the polypropylene-based resin and the glass fibers; and
(c) a step of supplying an additional polypropylene-based resin to the melt kneading extruder to obtain the polypropylene resin composition, wherein the MFR of the additional polypropylene-based resin is 30 to 60 g/10 minutes (at 230°C under a load of 2.169 kgf), and the content of the glass fibers is 30 to 60% by mass relative to the mass of the polypropylene resin composition.

The polypropylene-based resin in step (a) is the above-described polypropylene resin, the above-described modified polypropylene resin, or a mixture thereof. The MFR of the polypropylene-based resin is 3 to 15 g/10 minutes, and preferably 5 to 15 g/10 minutes at 230°C under a load of 2.169 kgf. When the MFR is 3 g/10 minutes or higher, a viscosity can be obtained which allows the glass fibers to be uniformly dispersed in the polypropylene-based resin. When the MFR is 15 g/10 minutes or lower, the viscosity of the polypropylene-based resin is not lowered to such an extent that the glass fibers cannot be uniformly dispersed.

For example, an electrically-powered feeder, a popper, or the like can be used to supply the polypropylene-based resin.

The bundle of glass fibers in step (b) is one in which glass fibers are bundled with a sizing agent. In general, the sizing agent also serves as a surface treatment agent for improving the adhesion between the glass fibers and the polypropylene-based resin. The sizing agent used in the present invention may be the above-described surface treatment agent. In the bundle of glass fibers, the glass fibers are loosely bonded with each other by the sizing agent, but the bonding between glass fibers is loosened by the melt kneading with the polypropylene-based resin. For example, since a solid epoxy resin or a maleic acid-graft-polymerization-modified polypropylene resin, which are preferred sizing agents of the present invention, has thermoplasticity, the bonding between the glass fibers is loosened during melt kneading and the fibers are spread.

The fiber lengths of the glass fibers are 1.5 to 6 mm, and preferably 3 to 6 mm. When the fiber lengths of the glass fibers are 1.5 mm or more, the glass fibers can be easily fed at a constant rate by using an electrically-powered feeder. When the fiber lengths of the glass fibers are 6 mm or less, the glass fiber can be easily dispersed uniformly in the polypropylene-based resin during the melt kneading. The glass fibers are cut during the melt kneading with the polypropylene-based resin into shorter fiber lengths.

The number of the glass fibers bundled in the bundle of glass fibers is preferably 900 to 1500, and more preferably 900 to 1100. When the number of the glass fibers bundled is 900 or more, the frequency of cutting of the glass fibers during melt kneading decreases. When the number of the glass fibers bundled is 1500 or less, the bundled glass fibers can be easily spread, so that the glass fibers are uniformly dispersed in the polypropylene-based resin.

The amount of the glass fibers supplied in step (b) is 60 to 75 % by mass, and preferably 60 to 70% by mass relative to the total mass of the polypropylene-based resin supplied in step (a) and the glass fibers supplied in step (b). When the amount of the glass fibers is in this range, the frequency of cutting of the glass fiber which occurs during the melt kneading is reduced, making it possible to obtain a resin composition comprising glass fibers having desired fiber lengths.

For example, an electrically-powered feeder can be used to supply the bundle of glass fibers.

The additional polypropylene-based resin in step (c) is the above-described polypropylene resin, the above-described modified polypropylene resin, or a mixture thereof. The additional polypropylene-based resin may be the same as or different from the polypropylene-based resin in step (a) . The MFR of the additional polypropylene-based resin is 30 to 60 g/10 minutes, and preferably 30 to 55 g/10 minutes at 230°C under a load of 2.169 kgf. When the MFR is 30 g/10 minutes or higher, the viscosity of the polypropylene-based resin is not increased to such an extent that the frequency of cutting of the glass fibers is increased during melt kneading. When the MFR is 60 g/10 minutes or lower, the glass fibers are more likely to be uniformly dispersed in the polypropylene-based resin.

For example, an electrically-powered feeder or the like can be used to supply the additional polypropylene-based resin.

In the obtained polypropylene resin composition, the content of the glass fibers is 30 to 60 % by mass, preferably 40 to 60 % by mass, more preferably 45 to 55% by mass relative to the mass of the polypropylene resin composition. When the content of the glass fibers is 30% by mass or more, the mechanical strength of an injection-molded article can be improved. When the content of the glass fibers is 60% by mass or less, it is possible to obtain an injection-molded article excellent in mechanical strength and having a flat and smooth surface.

The melt kneading extruder may be of a single-screw type, a twin-screw type, or the like. From the viewpoint of uniform dispersal of the glass fibers in the polypropylene-based resin, a twin-screw-type melt kneading extruder is preferable.

The melt kneading temperature in the melt kneading extruder is preferably 180 to 250°C, and more preferably 190 to 230°C. When the melt kneading temperature is within this range, the melting of the polypropylene-based resin proceeds so rapidly that the melt kneading does not take much time, and further that the oxidative degradation of the polypropylene-based resin is suppressed.

The melt kneading extruder has two or more, preferably three raw material supply ports. The polypropylene-based resin, the bundle of glass fibers, and the additional polypropylene-based resin may be supplied through the same supply port, or may be supplied through mutually different supply ports. Preferably, the polypropylene-based resin is supplied through a first supply port, the bundle of glass fibers is supplied through a second supply port, and the additional polypropylene-based resin is supplied through a third supply port.

The polypropylene resin composition of the present invention is preferably used for production of consumer goods such as office furniture and sporting goods, electrical and electronic components, and formed resin articles used in automotive engine rooms.

The polypropylene resin composition of the present invention has a high glass fiber content ratio and an improved mechanical strength, has good appearance, and does not exhibit anisotropy in strength.

The high glass fiber content ratio refers to a glass fiber content ratio which is, for example, 30% by mass or higher, preferably 40% by mass or higher, and more preferably 50% by mass or higher relative to the mass of the polypropylene resin composition.

The mechanical strength of the polypropylene resin composition can be evaluated by measuring, for example, the tensile strength, bending strength, bending modulus, Charpy impact strength, or the like. The tensile strength can be determined according to JIS K7161. The bending strength and the bending modulus can be determined according to JIS K7171. The Charpy impact strength can be determined according to JIS K7111.

The anisotropy in strength refers to a phenomenon that the difference in strength is created between a direction parallel to and a direction perpendicular to the flow direction of the resin composition during the injection molding. The anisotropy in strength can be evaluated by measuring any strength by using test pieces cut out in the direction parallel to and the direction perpendicular to the flow direction during injection molding.

The appearance of the polypropylene resin composition can be evaluated by measuring surface roughnesses, and calculating the arithmetic mean surface roughness. The arithmetic mean surface roughness refers to the number-average value of the lengths of concavities and convexities on the surface measured with a surface roughness tester.

Hereinafter, the present invention will be described in detail based on Examples. However, the present invention is not limited to Examples.

### Examples

### Example 1

Through a first supply port of a twin-screw melt kneading extruder having three raw material supply ports, 40 parts by mass of a polypropylene-based resin (MFR: 5 g/10 minutes (at 230°C under a load of 2.169 kgf)) which was a mixture of a polypropylene resin (MFR: 5 g/10 minutes (at 230°C under a load of 2.169 kgf)) and a modified polypropylene resin (a polypropylene resin in which maleic acid was graft polymerized, acid number: 60 mg KOH/g, MFR: 12 g/10 minutes (at 230°C under a load of 2.169 kgf)) (the mass ratio of the polypropylene resin to the modified polypropylene resin was 97:3) was introduced by using an electrically-powered feeder. Next, 60 parts by mass of bundles of glass fibers (E glass fibers subjected to a surface treatment with a polypropylene resin having an acid number of 74 mg KOH/g in which maleic acid was graft polymerized, fiber length: 3 mm, fiber diameter: 11 µm, the number of glass fibers bundled: 1100) were introduced through a second supply port by using an electrically-powered feeder. Next, 20 parts by mass of a polypropylene resin (MFR: 30 g/10 minutes (at 230°C under a load of 2.169 kgf)) was introduced through a third supply port by using an electrically-powered feeder to obtain a polypropylene resin composition. The raw materials were melt kneaded at 230°C.

### Example 2

A polypropylene resin composition was obtained in the same manner as in Example 1, except that 30 parts by mass of a polypropylene-based resin (MFR: 12 g/10 minutes (at 230°C under a load of 2.169 kgf)) having a mass ratio of the polypropylene resin to the modified polypropylene resin of 90:10 was used as the polypropylene-based resin introduced through the first supply port, that the amount of the bundles of glass fibers introduced through the second supply port was 70 parts by mass, and that the amount of the polypropylene resin introduced through the third supply port was 40 parts by mass.

### Example 3

A polypropylene resin composition was obtained in the same manner as in Example 1, except that 35 parts by mass of a polypropylene-based resin (MFR: 12 g/10 minutes (at 230°C under a load of 2.169 kgf)) having a mass ratio of the polypropylene resin to the modified polypropylene resin of 95:5 was used as the polypropylene-based resin introduced through the first supply port, that the amount of the bundles of glass fibers introduced through the second supply port was 65 parts by mass, and that the amount of the polypropylene resin introduced through the third supply port was 30 parts by mass.

### Comparative Example 1

A polypropylene resin composition was produced such that the MFR of the polypropylene-based resin introduced through the first supply port was 30 g/10 minutes (at 230°C under a load of 2.169 kgf), that the amount of the glass fibers immediately after the introduction of the bundles of glass fibers was 50% by mass relative to the total mass of the polypropylene-based resin and the glass fibers, and that no additional polypropylene-based resin was introduced through the third supply port.

Specifically, a polypropylene resin composition was obtained in the same manner as in Example 1, except that 50 parts by mass of a polypropylene-based resin (MFR: 30 g/10 minutes (at 230°C under a load of 2.169 kgf)) having a mass ratio of the polypropylene resin to the modified polypropylene resin of 9:1 was used as the polypropylene-based resin introduced through the first supply port, that the amount of the bundles of glass fibers introduced through the second supply port was 50 parts by mass, and that no polypropylene resin was introduced through the third supply port.

### Comparative Example 2

A polypropylene resin composition was produced such that the amount of the glass fibers immediately after the introduction of the bundle of glass fibers was 80% by mass relative to the total mass of the polypropylene-based resin and the glass fibers.

Specifically, a polypropylene resin composition was obtained in the same manner as in Example 1, except that 20 parts by mass of a polypropylene-based resin (MFR: 15 g/10 minutes (at 230°C under a load of 2.169 kgf)) having a mass ratio of the polypropylene resin to the modified polypropylene resin of 5:5 was used as the polypropylene-based resin introduced through the first supply port, that the amount of the bundles of glass fibers introduced through the second supply port was 80 parts by mass, and that 60 parts by mass of a polypropylene resin (MFR: 60 g/10 minutes (at 230°Cunder a load of 2.169 kgf)) was used as the polypropylene resin introduced through the third supply port.

The polypropylene resin compositions obtained in Examples 1 to 3 and Comparative Examples 1 and 2 were subjected to the following tests. Table 1 shows the test results.

### Measurement of Glass Fiber Length

The resin components in the resin compositions of Examples 1 to 3 and Comparative Examples 1 and 2 were combusted in an electric furnace at 550°C to take out the glass fibers. From 100-fold magnified images of the obtained glass fibers, 200 test pieces were extracted at random, and the magnified glass fiber images were measured by using a ruler. The distribution of the glass fiber lengths and the mass-average fiber length were determined by statistical processing.

### Measurement of MFR

The MFRs of the resin compositions of Examples 1 to 3 and Comparative Examples 1 and 2 were measured according to JIS K7210.

Formed articles were obtained by injection molding of the resin compositions of Examples 1 to 3 and Comparative Examples 1 and 2 by using an injection molding machine at a resin-melting temperature of 220°C and a mold temperature of 80°C. The formed articles were subjected to the following evaluations.

### Measurement of Surface Roughness

By using 150-mm square injection-molded articles having a thickness of 3 mm and by using a surface roughness tester (SE300-39 manufactured by Kosaka Laboratory Ltd.), the depths and heights of fine concavities and convexities on the surfaces of the formed articles were measured. Based on the measured values, the arithmetic mean surface roughness was calculated.

### Measurement of Tensile Strength

The measurement was conducted according to JIS K7161.

### Measurement of Bending Strength

The measurement was conducted according to JIS K7171. Note, however, that test pieces in a direction (MD) parallel to and a direction (TD) perpendicular to the flow during forming were fabricated only for the bending test, and the anisotropy in strength was evaluated. A larger difference in bending strength value between the MD and the TD is considered to be more anisotropic.

### Measurement of Bending Modulus

The measurement was conducted according to JIS K7171.

### Measurement of Charpy Impact Strength

The measurement was conducted according to JIS K7111.

**Table 1**

| | | Example 1 | Example 2 | Example 3 | Comp. Ex. 1 | Comp. Ex. 2 |
|---|---|---|---|---|---|---|
| Glass fiber content ratio | % by mass | 50.1 | 50.0 | 50.1 | 50.2 | 49.7 |
| Mass-average fiber length L | µm | 284 | 220 | 267 | 325 | 162 |
| Amount of glass fibers with L ± 100 µm | % by mass | 61 | 68 | 64 | 52 | 57 |
| Amount of glass fibers with 400 µm or more | % by mass | 21 | 19 | 20 | 32 | 12 |
| MFR (230°C/2.169 kgf) | g/10 minutes | 2.65 | 3.02 | 2.95 | 2.14 | 3.96 |
| Arithmetic mean surface roughness Ra | µm | 0.395 | 0.387 | 0.390 | 0.578 | 0.364 |
| Tensile strength | MPa | 122 | 117 | 121 | 125 | 85 |
| Bending strength (MD) | MPa | 208 | 195 | 204 | 208 | 152 |
| Bending strength (TD) | MPa | 207 | 195 | 199 | 184 | 137 |
| Bending modulus | GPa | 12.08 | 11.08 | 11.58 | 12.53 | 9.90 |
| Charpy impact strength with V notch | KJ/m2 | 13.5 | 12.4 | 13.0 | 13.6 | 9.1 |

### Industrial Applicability

The polypropylene resin composition of the present invention is useful for the production of consumer goods such as office chairs, office furniture, and sporting goods, electrical and electronic components, and formed resin articles used in automotive engine rooms.

## Claims

1. A polypropylene resin composition comprising a polypropylene-based resin and glass fibers,
wherein the glass fibers have a mass-average fiber length of 200 to 300 µm,
wherein 60% by mass or more of the glass fibers relative to the mass of the glass fibers have fiber lengths in the range of ±100 µm from the mass-average fiber length, and
wherein the content of the glass fibers is 30 to 60% by mass relative to the mass of the polypropylene resin composition.

2. The polypropylene resin composition according to claim 1, wherein 25% by mass or less of the glass fibers relative to the mass of the glass fibers have fiber lengths of 400 µm or more.

3. The polypropylene resin composition according to claim 1 or 2, wherein the glass fibers have fiber diameters of 9 to 13 µm.

4. The polypropylene resin composition according to any one of claims 1 to 3, wherein the glass fibers are E glass fibers or S glass fibers.

5. The polypropylene resin composition according to any one of claims 1 to 4, which is used for injection molding.

6. A method for producing the polypropylene resin composition according to claim 1, comprising the steps of:
(a) supplying a polypropylene-based resin to a melt kneading extruder, wherein the melt flow rate of the polypropylene-based resin is 3 to 15 g/10 minutes (at 230°C under a load of 2.169 kgf);
(b) supplying a bundle of glass fibers having fiber lengths of 1.5 to 6 mm to the melt kneading extruder, and melt-kneading the polypropylene-based resin and the glass fibers with each other, wherein the content of the glass fibers is 60 to 75% by mass relative to the total mass of the polypropylene-based resin and the glass fibers; and
(c) supplying an additional polypropylene-based resin to the melt kneading extruder to obtain the polypropylene resin composition, wherein the melt flow rate of the additional polypropylene-based resin is 30 to 60 g/10 minutes (at 230°C under a load of 2.169 kgf), and wherein the content of the glass fibers is 30 to 60% by mass relative to the mass of the polypropylene resin composition.

7. The method according to claim 6, wherein the number of glass fibers bundled in the bundle of glass fibers is 900 to 1500.

8. The method according to claim 6 or 7, wherein the polypropylene-based resin in step (a) is a polypropylene resin, a modified polypropylene resin, or a mixture of a polypropylene resin and a modified polypropylene resin.

9. The method according to any one of claims 6 to 8, wherein the additional polypropylene-based resin in step (c) is a polypropylene resin, a modified polypropylene resin, or a mixture of a polypropylene resin and a modified polypropylene resin.

10. The method according to any one of claims 6 to 9,
wherein the melt kneading extruder has three supply ports,
wherein the polypropylene-based resin is introduced through a first supply port,
wherein the bundle of glass fibers is supplied through a second supply port, and
wherein the additional polypropylene-based resin is supplied through a third supply port.

11. The method according to any one of claims 6 to 10, wherein the melt kneading extruder is a twin-screw-type melt kneading extruder.
